# EUROPEAN PATENT APPLICATION

(11) **EP 4 256 969 A2**
(43) Date of publication of application: **11.10.2023**
(21) Application number: 23187873.7
(22) Date of filing: 17.08.2018
(51) Int. Cl.: A23G 4/20

(54) **CHEWING GUM COMPOSITIONS AND METHODS OF MAKING THEREOF**

(30) Priority: 18.08.2017 US 201762547384 P
(62) Divisional of application: 18769888.1
(71) Applicant: Intercontinental Great Brands LLC, East Hanover, NJ 07936 (US)
(72) Inventor: HOANG, Tinyee, East Hanover, 07936 (US); MUELLER, Serena, East Hanover, 07936 (US); ELEJALDE, Cesar, East Hanover, 07936 (US); KAPAUN, Camille, East Hanover, 07936 (US); SHAKIR, Sherif, East Hanover, 07936 (US)
(74) Representative: Boult Wade Tennant LLP

(57) **Abstract**

Disclosed are compositions useful for improving or enhancing the organoleptic properties, especially mouth feel and surface cooling effect, of pellet chewing gum. The compositions having a core chewing gum region with a Shore A hardness of less than 40, specifically less than 35; and a friable coating region providing a significant cooling effect as exhibited by rapid endothermic surface coating dissolution.

## Description

### BACKGROUND

Hard panned coated chewing gum products are well known and provide a crunchy texture when first bit into by the consumer. Hard panned products are prepared by a coating process involving the application of a highly concentrated solution of saccharide or sugar alcohol over chewing gum cores followed by drying with forced air to build up a hard coating shell around the core. Drying is conducted after every application of coating solution. The application and drying processes are repeated until a desired coating weight is achieved; usually over forty applications of coating solution are needed. The hard panning process results in a highly packed continuous structure that is fully crystallized and crunchy when bit into. Hard panning processes require the core to be very firm in order for the cores to be coated without substantial shape deformation.

Soft Panning: a.k.a. agglomeration typically involves the application of a highly concentrated solution of a saccharide such as sugar, usually with an anti-crystallizing material (e.g. corn syrup). Instead of drying as in hard panning process, a fine powder or very small granulated material is applied to the wetted cores, until no more is absorbed. Typical soft panning procedures do not have a drying step as the moisture on the cores is absorbed by the powder or dry charge. The texture of the resulting coating is usually soft. The structure is semi-crystallized, and there is residual moisture by design. A soft panned product usually has to be conditioned for many (e.g. 48) hours to 'cure' the coating. The final coating weight of a soft panned product is achieved much faster than the hard panned product, usually in about four to six applications. The resulting texture of a soft panned product is tender and not friable/crispy or crunchy.

There remains a need in the art for new chewing gum products and methods of forming that allows for a softer core to provide a soft chew and coatings that can be applied to the core and which have a low crunch compared to hard panned coatings and a crisper crunch compared to soft panned coating. There further remains a need in the art for new chewing gum products that can deliver flavor and cooling in new and unique ways.

### SUMMARY

In an embodiment, a coated chewing gum product comprises a soft chewing gum composition core having a Shore A hardness of about 12 to about 30, about 15 to about 27, or about 18 to about 24; and a friable coating surrounding the core, wherein the coating comprises a sugar alcohol having a large negative heat of solution, such as xylitol, erythritol, or a combination thereof; wherein the coated chewing gum product exhibits a hardness measured as a peak force of about 1500 to about 3000 grams, about 1750 to about 2800 grams, or about 2000 to about 2500 grams as determined using a texture analyzer.

In another embodiment, a coated chewing gum product comprises a soft chewing gum composition core comprising a gum base, and a bulk sweetener that is a mixture of xylitol and sorbitol in a weight ratio of about 3.75 : about 1 to about 1.5 : about 1 xylitol : sorbitol; specifically about 2.5 : about 1 to about 2.25 : about 1 xylitol : sorbitol; wherein the soft chewing gum composition core has a Shore A hardness of about 12 to about 30, about 15 to about 27, or about 18 to about 24; and a friable coating surrounding the core, wherein the coating comprises a dry charge of xylitol and gum arabic, wherein the xylitol dry charge has a mean diameter of about 10 to about 400 micrometers, specifically about 20 to about 300 micrometers, specifically about 30 to about 200 micrometers, and more specifically about 40 to about 100 micrometers as measured using a laser particle size analyzer which measures particle size distribution based on the volume standard; and wherein the coated chewing gum product exhibits a hardness measured as a peak force of about 1500 to about 3000 grams, about 1750 to about 2800 grams, or about 2000 to about 2500 grams as determined using a texture analyzer.

In yet another embodiment, a method of making a coated chewing gum product comprises forming a soft chewing gum composition core; and coating the core with alternating layers of a coating syrup and dry charge to form a friable coating surrounding the core, wherein the coating comprises a sugar alcohol having a large negative heat of solution, such as xylitol, erythritol, or a combination thereof; wherein the coated chewing gum product exhibits a hardness measured as a peak force of about 1500 to about 3000 grams, about 1750 to about 2800 grams, or about 2000 to about 2500 grams as determined using a texture analyzer; wherein the soft chewing gum composition core of the chewing gum product has a Shore A hardness of about 12 to about 30, about 15 to about 27, or about 18 to about 24.

The above described and other features are exemplified by the following detailed description.

### BREIF DESCRIPTION OF THE DRAWINGS

The accompanying drawings incorporated in and forming a part of the specification:
Figure 1 illustrates a Crunch curve indicative of the coating texture of a soft chewing gum pellet with a friable coating compared to comparative coated chewing gum products.
Figure 2 illustrates the Slope curve indicative of the coating texture of a soft chewing gum pellet with a friable coating compared to comparative coated chewing gum products.
Figure 3 illustrates the results of a Coating Dissolution Study to measure cooling effect of the coating for a soft chewing gum pellet with a friable coating compared to comparative coated chewing gum products.

### DETAILED DESCRIPTION

Disclosed herein are coated, soft chewing gum products, specifically soft chewing gum pellets with a friable coating, which provides a crispy bite because of the coating, and not a hard crunchy bite found in hard panned coated products or a soft bite as found in soft panned coated products (e.g. jelly beans). The coating, made from a sugar alcohol having a high negative heat of solution, also provides rapid and intense mouth cooling effect. The chewing gum core is formulated to be softer than traditional chewing gum by selection of the type of bulk sweetener. When the select bulk sweetener also has a high negative heat of solution, cooling initially provided by the coating can be continued or enhanced with cooling provided by the core bulk sweetener, thus providing an overall significant cooling effect.

As used herein, the term "friable" when describing the chewing gum product coating means the coating imparts a crispy texture, having firmness and brittleness unlike a soft panned coating, and which is broken up with less mastication force than a hard panned coating.

By selection of types of flavorants and location within the coated soft chewing gum product, unique flavor transitions can be achieved where a consumer can first experience a coating flavor followed by a flavor from the core composition, and when flavor beads are used in the core, multiple flavor bursts can be experienced throughout the chewing process as the beads are randomly ruptured by chewing to release the encapsulated flavor. In one embodiment, when the coated soft chewing gum product is chewed the consumer perceives at least two flavor transitions and at least three different flavor experiences within the first three minutes of chewing the product.

Visually the coated soft chewing gum product is unique because of the hybrid panning coating process employed. Use of particulate colors, glitter, speckles or the like provide further visual interest.

Overall, the coated soft chewing gum products disclosed herein can deliver a unique flavor experience through transitions - friable/crispy coating, soft chew, longer lasting flavor.

The soft chewing gum composition core having a Shore A hardness of about 12 to about 30, about 15 to about 27, or about 18 to about 24 as measured using a Durometer Hardness Tester. Within this embodiment, the hardness is measured on a core of a chewing gum product after the coating has been removed. Removal of the coating can be achieved by washing or soaking the product in water, for example. The Shore A hardness can be tested according to ASTM D2240 (Type M) or ISO7619 (Type M). Additionally, the coated chewing gum product exhibits a hardness measured as a peak force of about 1500 to about 3000 grams, about 1750 to about 2800 grams, or about 2000 to about 2500 grams, determined using a texture analyzer.

### Soft Chewing gum Core

The chewing gum core of the chewing gum product is a softer gum core having a softer chew texture and a soft bite compared to traditional chewing gum.

To achieve a softer core that is still capable of being manufactured on standard gum forming equipment and still capable of withstanding the coating process for the friable coating, selection of a particular bulk sweetener material is made.

In general the chewing gum composition of the chewing gum core comprises a gum base, a bulk sweetener, and optionally an additional chewing gum ingredient as described herein, for example, a flavorant, a high intensity sweetener, a sensate, a coloring agent, a fat, or a combination thereof. To achieve a soft texture, the chewing gum composition bulk sweetener is selected from a mixture of xylitol and sorbitol, isomalt, mannitol, or maltitol. These bulk sweeteners are specifically in particulate form (either crystalline or amorphous). Other sugar alcohols may be used in combination with these, specifically the other sugar alcohol are used in low amounts. These additional sugar alcohols that can be used in low amounts include, for example, galactitol, a hydrogenated starch hydrolyzate, lactitol, polyglycitol, and the like, or a combination thereof. These additional sugar alcohols can be in particulate form (either crystalline or amorphous), molten (melted) form having a low moisture content (e.g. less than 10 wt%, specifically less than 5 wt%), or in syrup form (also referred to as "solution") with water. Exemplary sugar alcohol syrups include sorbitol syrup, maltitol syrup, hydrogenated starch hydrolysate syrup, polyglycitol syrup, and the like.

When the mixture of xylitol and sorbitol is used as the chewing gum composition bulk sweetener, the weight ratio can be about 3.75 : about 1 to about 1.5 : about 1 xylitol : sorbitol; specifically about 2.5 : about 1 to about 2.25 : about 1 xylitol : sorbitol.

In an embodiment, mixtures of xylitol and maltitol as the chewing gum composition bulk sweetener is to be avoided as it was found to produce sticky gum resulting in manufacturing difficulties.

In an embodiment, mixtures of xylitol and sorbitol in a weight ratio of about 1 : about 2 to about 1 : about 3 xylitol : sorbitol is to be avoided as it was found that the resulting cores were too hard and made it difficult to develop a friable coating.

The amount of bulk sweetener in the chewing gum composition can be about 10 to about 85 weight percent (wt%) based on the total weight of the chewing gum composition, specifically about 20 to about 75 wt%, more specifically about 30 to about 65 wt%, and yet more specifically about 40 to about 55 wt%.

The mean particle size of the bulk sweetener used in the chewing gum composition can be about 20 to about 600 micrometers, specifically about 50 to about 450 micrometers, specifically about 80 to about 350 micrometers, and more specifically about 100 to about 250 micrometers as measured using a laser light diffraction technique and laser particle size analyzer which measures particle size distribution based on the volume standard.

The fat that can be used in the chewing gum composition can be those described in more detail below and can be a component of a chewing gum base, a separate chewing gum ingredient added separate from the gum base, or as part of both the gum base and added as a separate chewing gum ingredient in addition to the gum base. In an embodiment, the fat is a hydrogenated vegetable oil, hydrogenated cottonseed oil, hydrogenated palm kernel oil, hydrogenated soybean oil, hydrogenated sunflower seed oil, hydrogenated peanut oil, hydrogenated coconut oil, hydrogenated sesame oil, or a combination thereof.

As used herein, the term "gum base" refers to water insoluble material(s) and can include, for example, ingredients such as elastomers, vinyl polymers, resins, waxes, elastomer solvents, emulsifiers, plasticizers, bulking agents/fillers, fats, or a combination thereof. In an embodiment, the gum base comprises an elastomer and optionally an additional gum base ingredient, wherein the additional gum base ingredient is a vinyl polymer, a resin, a wax, a fat, an emulsifier, a filler, a softener, a plasticizer, an antioxidant, or a combination thereof.

The amount of gum base employed will vary depending upon various factors such as the type of base used, the consistency of the chewing gum desired, and the other components used in the composition to make the final chewing gum product. In general, the gum base will be present in amounts of about 10 to about 55 weight percent (wt%) based on the total weight of the chewing gum composition, specifically about 15 to about 50 wt%, more specifically about 20 to about 45 wt%, and yet more specifically about 25 to about 35 wt%.

Exemplary elastomers to be used in the chewing gum base include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like, or a combination thereof. Synthetic elastomers such as butadiene-styrene copolymers, polyisobutylene, isobutyleneisoprene copolymers, polyethylene, a combination thereof, and the like, or a combination thereof are also useful. The gum base can include a non-toxic vinyl polymer, such as polyvinyl acetate and its partial hydrolysate, polyvinyl alcohol, or a combination thereof. When utilized, the molecular weight of the vinyl polymer can range from about 3,000 up to and including about 94,000. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate, or a combination thereof.

Conventional additives can be included in the gum base in effective amounts such as plasticizers or softeners to provide a variety of desirable textures and consistency properties. Because of the low molecular weight of these components, the plasticizers and softeners are able to penetrate the fundamental structure of the gum base making it plastic and less viscous. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerin, or a combination thereof. Some of these ingredients may be added at the time of gum base formation or added later during the production of the chewing gum composition.

Waxes, for example, natural and synthetic waxes, petroleum waxes such as polyurethane waxes, polyethylene waxes, paraffin waxes, microcrystalline waxes, fatty waxes, beeswax, vegetable wax, rice bran wax, candelilla wax, carnuba wax, sorbitan monostearate, tallow, propylene glycol, and the like, or a combination thereof, can also be incorporated into the gum base to obtain a variety of desirable textures and consistency properties.

The wax can be present in the gum base in an amount of about 0.1 to about 25 wt%, specifically about 3 to about 20 wt%, more specifically about 5 to about 15 wt% and yet more specifically about 8 to about 12 wt% based on the total weight of the gum base.

The gum base can contain a solid or liquid (e.g. oil) lipid material including fat. Exemplary fats include fats and oils of vegetable origin, animal origin, or a combination thereof. Suitable vegetable fats can include soybean, cottonseed, corn, almond, peanut, sunflower, rapeseed, olive, palm, palm kernel, illipe, shea, coconut, cocoa, cocoa butter, or a combination thereof. The forgoing vegetable fats can be hydrogenated to varying degrees as desired or separated by fractional crystallization. Suitable animal fats include dairy fats such as milk fat and butter. Exemplary lipid materials include triglycerides, fatty alcohols, fatty acids, or a combination thereof. The triglyceride can include medium chain triglycerides, long chain triglycerides, and the like. Specific fats include hydrogenated coconut oil, hydrogenated cottonseed oil, hydrogenated palm oil, hydrogenated palm kernel oil, hydrogenated peanut oil, hydrogenated sunflower seed oil, hydrogenated soybean oil, or a combination thereof.

The fat can be present in the gum base in an amount of about 0.5 to about 30 wt%, specifically about 2 to about 25 wt%, more specifically about 5 to about 20 wt%, yet more specifically about 10 to about 20 wt%, and still yet more specifically about 15 to about 18 wt% based on the total weight of the gum base. In an embodiment, a portion of the fat can be a separate chewing gum ingredient added separate from the gum base, or the fat can be both part of the gum base and added as a chewing gum ingredient in addition to the gum base.

The gum base can optionally contain conventional elastomer solvents to aid in softening the elastomer base component, for example resins such as polymers of alpha-pinene or beta-pinene; methyl, glycerol or pentaerythritol esters of rosins or modified rosins and gums, such as hydrogenated, dimerized or polymerized rosins, or a combination thereof; the pentaerythritol ester of partially hydrogenated wood or gum rosin; the pentaerythritol ester of wood or gum rosin; the glycerol ester of wood rosin; the glycerol ester of partially dimerized wood or gum rosin; the glycerol ester of polymerized wood or gum rosin; the glycerol ester of tall oil rosin; the glycerol ester of wood or gum rosin; the partially hydrogenated wood or gum rosin; the partially hydrogenated methyl ester of wood or rosin; and the like; or a combination thereof. The elastomer solvent can be used in amounts of about 5 to about 75 wt% base on the total weight of the gum base, and specifically about 45 to about 70 wt%.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, or a combination thereof. These fillers or adjuvants can be used in the gum base in various amounts. Specifically the amount of filler, when used, can be present in an amount of about 5 to about 60 wt% based on the total weight of the gum base, and more specifically about 20 to about 30 wt%.

Suitable emulsifiers for use in the gum base include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate, lecithin, ammonium phosphatide, sucrose esters of fatty acids, sucroglycerides, propane-1,2-diol esters of fatty acids, or a combination thereof.

The chewing gum composition may further comprise an additional chewing gum ingredient wherein the additional ingredient is a flavorant, a fat, a high intensity sweetener, a food acid or salt thereof, a sensate, a flavor modulator or potentiator, a coloring agent, a humectant, a softener, or a combination thereof.

Exemplary flavorants (flavor, flavoring agent) for use in the chewing gum composition can include those artificial or natural flavors known in the art, for example synthetic flavor oils, natural flavoring aromatics and/or oils, oleoresins, extracts derived from plants, leaves, flowers, fruits, and the like, or a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, or a combination thereof.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavorant can be used in liquid or solid form. The flavorant can be used in free form or encapsulated form. When used in solid (dry) form, suitable drying means such as spray drying a flavor oil can be used. Alternatively, the flavorant can be encapsulated, absorbed onto water soluble materials by means known in the art, for example cellulose, starch, sugar, maltodextrin, gum arabic, and the like. In an embodiment, the flavorant can be used in physical forms effective to provide an initial burst of flavor or a prolonged sensation of flavor. Flavor beads having a high flavor content (about 70%) in the form of liquid flavor encapsulated in an edible shell can be used alone or in combination with other flavor forms in the chewing gum composition. Flavor beads can include a hydrocolloid or gelatin shell.

More than one flavorant can be used in the chewing gum composition. The amount and type of flavorant can be chosen based on the targeted release profile and flavor intensity desired. The chewing gum composition generally comprises a flavorant in an amount of about 0.001 to about 5 wt% based on the total weight of the chewing gum composition, specifically about 0.01 to about 4 wt%, yet more specifically about 0.1 to about 3 wt%, and still yet more specifically about 1.0 to about 2 wt%.

The chewing gum composition may further contain a high intensity sweetener. A "high intensity sweetener" as used herein means agents having a sweetness greater than the sweetness of sucrose. In an embodiment, a high intensity sweetener has a sweetness that is at least 100 times that of sugar (sucrose) on a per weight basis, specifically at least 500 times that of sugar on a per weight basis. In an embodiment the high intensity sweetener is at least 1,000 times that of sugar on a per weight basis, more specifically at least 5,000 times that of sugar on a per weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include:
a) water-soluble sweetening agents such as dihydrochalcones, monellin, steviosides, rebaudiosides, glycyrrhizin, dihydroflavenol, monatin, and L-aminodicarboxylic acid aminoalkenoic acid ester amides, such as those disclosed in U.S. Pat. No. 4,619,834, or a combination thereof;
b) water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination thereof; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination thereof;
c) water-soluble sweeteners derived from naturally occurring water-soluble sweeteners, such as steviosides and stevia derived compounds, for example, steviol glycosides such as rebaudiocides including rebaudiocide A, and the like, lo han quo and lo han quo derived compounds such as iso-mogroside V and the like, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include, for example: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1', 6'-dichloro 1',6'-dideoxy sucrose; 4-chloro-4-deoxy-alpha-D-galactopyranosyl-1,6-dichloro-l,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-l,6-dideox y-beta-D-fructofuranoside, or 4,6,1',6'-tetrachloro4,6,1',6'-tetradeoxygalacto-sucrose; 4,6,1',6'-tetradeoxy-sucrose, or a combination thereof;
d) protein based sweeteners such as thaumaoccous danielli, talin, or a combination thereof; and
e) amino acid based sweeteners.

Furthermore, the high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, or a combination thereof.

The chewing gum composition may optionally further comprise a coloring agent. Coloring agents (colors, colorants, colorings) can be used in amounts effective to produce a desired color for the chewing gum. Suitable coloring agents include pigments, which can be incorporated in amounts up to about 6 wt% based on the total weight of the chewing gum. For example, titanium dioxide can be incorporated in amounts up to about 2 wt%, and specifically less than about 1 wt% based on the total weight of the chewing gum. Suitable coloring agents also include natural food colors and dyes suitable for food, drug, and cosmetic applications.

Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), beta-apo-8'-carotenal (E160e), beta-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), or a combination thereof. In an embodiment, certified colors can include FD&C aluminum lakes, or a combination thereof. A full recitation of all FD& C colorants and their corresponding chemical structures may be found in the Kirk-Othmer Encyclopedia of Chemical Technology, 4th Edition, in volume 1 at pages 492-494.

Exemplary food acids or salts thereof for use in the chewing gum composition can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof. The food acid or salt thereof may be used in free form or in an encapsulated form.

The chewing gum composition may comprise a sensate. Exemplary sensates include cooling agents, warming agents, tingling agents, effervescent agents, or a combination thereof. Cooling agents ("coolants") are additives that provide a cooling or refreshing effect in the mouth, in the nasal cavity, or on skin. For example, among the useful cooling agents are included menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-2,2-diisopropylbutanamide, N-ethyl-p-menthane-3-carboxamide (WS-3), ethyl ester of N-[[5-methyl-2-(1-methylethyl)cyclohexyl]carbonyl]glycine (WS-5), as well as the substantially pure ethyl ester of N-[[5-methyl-2-(1-methylethyl)cyclohexyl]carbonyl]glycine as disclosed in U.S. Patent No. 7,189,760 to Erman, et al which is incorporated in its entirety herein by reference, isopulegol, menthyloxy propane diol, 3-(l-menthoxy)propane-1,2-diol, 3-(l-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, N-(4-cyanomethylphenyl) p-menthanecarboxamide (G-180), Japanese mint oil, peppermint oil, 3-(l-menthoxy)ethan-1-ol, 3-(l-menthoxy)propan-1-ol, 3-(l-menthoxy)butan-1-ol, 1-menthylacetic acid N-ethylamide, l-menthyl-4-hydroxypentanoate, l-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT^{®} type MGA); 3-l-menthoxypropane-1,2-diol (from Takasago, FEMA 3784); and menthyl lactate; (from Haarman & Reimer, FEMA 3748, tradename FRESCOLAT^{®} type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic alpha-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one, compounds of the formula: 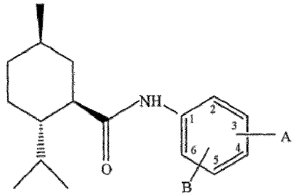 wherein B is selected from H, CH₃, C₂H₅, OCH₃, OC₂H₅; and OH; and wherein A is a moiety of the formula-CO-D, wherein D is selected from the following moieties: (i)-NR¹R², wherein R¹ and R² are independently selected from Hand C₁-C₈ straight or branched-chain aliphatic, alkoxyalkyl, hydroxyalkyl, araliphatic and cycloalkyl groups, or R¹ and R² together with the nitrogen atom to which they are attached form part of an optionally-substituted, five-or six-membered heterocyclic ring; (ii)-NHCH₂COOCH₂CH₃,-NHCH₂CONH₂,-NHCH₂CH₂OCH₃,-NHCH₂CH₂OH,-NHCH₂CH(OH)CH₂OH and (iii) a moiety selected from the group consisting of: 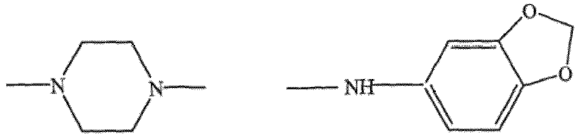 as disclosed in PCT Patent Application WO2006/125334 to Bell et al. which is incorporated in its entirety herein by reference, among others; or a combination thereof. Other compounds include the alpha-keto enamines disclosed in U.S. Patent No. 6,592,884 to Hofmann et al. which is incorporated in its entirety herein by reference. These and other suitable cooling agents are further described in the following U.S. patents, all of which are incorporated in their entirety by reference hereto: U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Published Patent Applications, all of which are incorporated in their entirety by reference hereto: U.S. 2005/0222256; 2005/0265930.

Warming agents can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming agents included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamylether, vanillyl alcohol n-hexylether, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, or a combination thereof.

In an embodiment, tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin; or a combination thereof. In an embodiment, alkylamides extracted from materials such as jambu or sanshool may be included. Additionally, in an embodiment, a sensation is created due to effervescence. Such effervescence is created by combining an alkaline material with an acidic material, either or both of which may be encapsulated. In an embodiment, an alkaline material may include alkali metal carbonates, alkali metal bicarbonates, alkaline earth metal carbonates, alkaline earth metal bicarbonates or a combination thereof. In an embodiment, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid or a combination thereof. Examples of "tingling" type sensates include those disclosed in U.S. Patent Nos. 6,780,443, 6,159,509, 5,545,424, and 5,407,665, each of which is incorporated by reference herein in its entirety.

The chewing gum composition may optionally further comprise a flavor modulator or potentiator. A sweet taste can come from flavor modulators or potentiators and/or from flavorants as well as from sweeteners. Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In an embodiment, flavor modulators or potentiators are designed to intensify, supplement, modify, or enhance the perception of flavor, sweetness, tartness, umami, kokumi, saltiness or a combination thereof can be included. Thus, the addition of flavor modulators or potentiators can impact the overall taste of the chewing gum. For example, flavors can be compounded to have additional sweet notes by the inclusion of flavor modulators or potentiators, such as vanilla, vanillin, ethyl maltol, furfual, ethyl propionate, lactones, or a combination thereof.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs), or a combination thereof. In an embodiment, sugar acids, sodium chloride, potassium chloride, sodium acid sulfate, or a combination thereof are used. In an embodiment, glutamates such as monosodium glutamate, monopotassium glutamate, hydrolyzed vegetable protein, hydrolyzed animal protein, yeast extract, or a combination thereof are included. Further examples include adenosine monophosphate (AMP), glutathione, and nucleotides such as inosine monophosphate, disodium inosinate, xanthosine monophosphate, guanylate monophosphate, or a combination thereof. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final product composition, the individual flavor, and the strength of flavor desired. Thus, the amount of flavoring can be varied in order to obtain the result desired in the final product and such variations are within the capabilities of those skilled in the art without the need for undue experimentation.

The chewing gum composition may optionally further comprise a humectant. Exemplary humectants include glycerin, propylene glycol, polyethylene glycol, or a combination thereof. The amount of humectant can be controlled to ensure the final chewing gum product does not unduly absorb moisture from the surrounding environment during production, packaging, storage, and use.

The chewing gum composition may further include a softener, such as those described herein for use in the gum base.

The chewing gum composition can be prepared using standard techniques and equipment known in the art.

In one exemplary process, a gum base is heated to a temperature sufficiently high to soften the gum base without adversely affecting the physical and chemical make up of the gum base, which will vary depending upon the composition of the gum base used, and is readily determined by those skilled in the art without undue experimentation. For example, the gum base can be conventionally melted to about 40°C to about 160°C, or melted to about 150°C to about 175°C, for a period of time sufficient to render the base molten, e.g., about thirty minutes, just prior to being admixed incrementally with the remaining ingredients of the gum base, if any, such as the plasticizer, fillers, and softener to plasticize the blend as well as to modulate the hardness, viscoelasticity and formability of the base. The chewing gum ingredients are next blended with the molten gum base. Mixing is continued until a uniform or homogeneous mixture of the chewing gum mass is obtained. The chewing gum mass can then be conditioned using traditional conditioning techniques or subjected to a heat/hold step as described herein followed by cooling and conditioning to form the chewing gum composition.

In another exemplary process, chewing gum ingredients are mixed with gum base without prior melting of the gum base or gum base ingredients. Mixing is continued until a uniform or homogeneous mixture of the chewing gum composition is obtained. Within this embodiment, the gum base can be in the form of a pelletized gum base that can be softened at 40 to 50°C rather than melting at higher temperatures.

In another embodiment, a combination of melted gum base and pelletized gum base can be used.

The formation of chewing gum products from the chewing gum compositions can be formed by an extrusion, a co-extrusion process, a laminate process, a compression process, a rolling and scoring process, a chain die process, a rotary die process, or a cut and wrap process, or a combination thereof. The compositions used to make the chewing gum products can be formed using a batch method or a continuous method.

In an embodiment, the chewing gum composition is prepared in a continuous process as described in International Application Publication WO2013158291 System and Method for Manufacturing Chewing Gum filed 15 March 2013, which is incorporated by reference herein in its entirety.

Suitable processes to make chewing gum and chewing gum products include those found in U.S. Patent Nos. 6,254,373, and 8,226,401, each of which is incorporated herein in its entirety.

In an embodiment, a method of forming a chewing gum comprises forming an initial chewing gum mass comprising a gum base and a bulk sweetener; heating the initial chewing gum mass to an elevated temperature, e.g., about 35 to about 60 °C, more specifically about 40 to about 55 °C, and yet more specifically about 45 to about 50 °C; maintaining the initial chewing gum mass at the elevated temperature for about 20 minutes to about 6 hours, specifically about 30 minutes to about 5 hours, and more specifically about 45 minutes to about 3 hours (this is alternatively called "the hold step"); and cooling and conditioning the initial chewing gum mass to result in a conditioned chewing gum mass. Within this embodiment, any one or more of the heating, holding, cooling, and/or conditioning steps can be conducted at a relative humidity of about 7% to about 45%, specifically about 13% to about 40%, more specifically about 15% to about 35%, yet more specifically about 18% to about 30, and still more specifically about 24% to about 30%. The chewing gum mass is not particularly limited and can be a chewing gum sheet, rope of chewing gum, formed pieces of chewing gum (e.g. cores), and the like.

The conditioning step can be conducted at a temperature below ambient temperature, specifically at or below 20 °C, more specifically at or below 18 °C, yet more specifically at or below 15 °C, and still more specifically at or below 13 °C.

"Initial chewing gum core hardness" means the hardness of a chewing gum composition core just after formation and prior to a heat/hold step and/or conditioning.

"Conditioned chewing gum core hardness" means the hardness of a chewing gum composition core after a conditioning process and prior to coating of the core.

The chewing gum composition can be prepared into discrete units ("cores") in the form of pellets, cubes, chunks, and the like. The formation into discrete units can be achieved using a chain die, or rolling and scoring process.

Any size core can be made, such as a core which can provide a multigram product, for example two grams or more per unit of product.

The cores of chewing gum composition can be coated and subsequently packaged. The cores can be coating with a hard or soft panned coating using coating processes known in the art, but is specifically coated with a coating that is friable in texture when bit by the consumer as discussed herein.

### Friable Coating - Hybrid Panning Process

The friable coating used on the coated soft chewing gum product is generally prepared from a hybrid panning coating technique where the cores are coated with a coating solution followed by application of a dry charge and then drying, specifically air drying. The process differs from a hard panning process in that a dry charge is used and there are fewer applications of coating solution. The process differs from a soft panning process in that a lower amount of dry charge is applied to the cores and there is a drying step after each application of coating solution and dry charge. Also, there are more applications of coating solution and dry charge than is employed in a typical soft panning process. Although a single application of coating solution and dry charge can be used, multiple applications of coating can be used to build up the coating weight and provide a friable coating. In an embodiment, about 5 to about 100 applications each of coating solution and dry charge are made, specifically about 10 to about 65 applications, and more specifically about 15 to about 30 applications. After coating, the coated cores are cured for several hours, e.g. 48 hours, during which the friable texture of the coating develops.

The coating structure formed using the hybrid process is much less dense than a hard panned product coating, and has a unique friable texture, as opposed to the more robust crunch of a hard panned product.

The coating solution can comprise water, a sugar alcohol, specifically the same sugar alcohol used in the dry charge, and a hydrocolloid such as gum arabic. In an embodiment, the sugar alcohol has a high negative heat of solution such as xylitol or erythritol. In a particular embodiment, the sugar alcohol of the coating solution can be xylitol. The solids concentration of the coating solution can be about 55 to about 80 wt %, specifically about 60 to about 75 wt%, and yet more specifically about 65 to about 75 wt%.

The dry charge can comprise particulate sugar alcohol and optionally powdered hydrocolloid such as gum arabic. In an embodiment, the sugar alcohol of the dry charge has a high negative heat of solution such as xylitol or erythritol. In a particular embodiment, the sugar alcohol of the dry charge can be xylitol.

The particle size of the dry charge sugar alcohol can have a mean diameter of about 10 to about 400 micrometers, specifically about 20 to about 300 micrometers, specifically about 30 to about 200 micrometers, and more specifically about 40 to about 100 micrometers as measured using a laser light diffraction technique and laser particle size analyzer which measures particle size distribution based on the volume standard.

In an embodiment, the particle size of the dry charge sugar alcohol can have a mean diameter of about 20 to about 70 micrometers; a d90 of about 80 to about 150 micrometers; and a d10 of about 1 to about 15 micrometers as measured using a laser light diffraction technique and laser particle size analyzer which measures particle size distribution based on the volume standard.

The coating may optionally comprise one or more additional ingredients including a flavorant; a high intensity sweetener; a food acid or salt thereof; a sensate (cooling, warming, tingling); a flavor modulator or potentiator; a colorant, including glitter, speckles and the like; or a combination thereof. Suitable flavorants, high intensity sweeteners, food acids or salts thereof, sensates, flavor modulators or potentiators, and colorants can include those previously described above for use in the chewing gum composition. When used, any one of the additional ingredients can be included in the coating solution, included in the dry charge, applied to the core as a component separate from the coating solution and dry charge, or a combination thereof.

The coating may also optionally further comprise a coloring agent, including those described herein for use in the chewing gum composition. Other suitable ingredients that can be added to the coating are glitter, speckles, and other particulate coloring agents capable of providing a unique visual characteristic to the coated product.

The coated soft chewing gum product can have about 65 to about 85 wt% core and about 15 to about 35 wt% coating, specifically about 70 to about 80 wt% core and about 20 to about 30 wt% coating, and more specifically about 73 to about 77 wt% core and about 23 to about 27 wt% coating based on the total weight of the product.

In an embodiment, the coated soft chewing gum product is centerfilled. The centerfill material can be a liquid; a solid including a powder; or a semisolid.

The features and advantages are more fully shown by the following examples which are provided for purposes of illustration, and are not to be construed as limiting the invention in any way.

### EXAMPLES

### Example 1. Soft Chewing Gum Pellet with Friable Coating

Soft chewing gum pellets with a friable coating were prepared from the formulations in Table 1. (Soft Chewing Gum Core Composition) and Table 2. (Friable Coating Composition).

**Table 1. Soft Chewing Gum Core Composition**

| | **Amount (weight %)** | | | |
|---|---|---|---|---|
| **Ingredient** | **A** | **B** | **C** | **D** |
| Gum base | 28-35 | 28-35 | 28-35 | 28-35 |
| Filler (e.g., talc, calcium carbonate, etc.) | 0-7 | 0-7 | 0-7 | 0-7 |
| Xylitol | 30-45 | - | - | - |
| Sorbitol | 12-20 | - | - | - |
| Isomalt | - | 35-65 | - | - |
| Mannitol | - | - | 35-65 | - |
| Maltitol | - | - | - | 35-65 |
| Emulsifier | 0-0.5 | 0-0.5 | 0-0.5 | 0-0.5 |
| Softener | 0-1.0 | 0-1.0 | 0-1.0 | 0-1.0 |
| Binding agent (e.g., maltitol syrup) | 0-1.0 | 0-1.0 | 0-1.0 | 0-1.0 |
| Unencapsulated flavor | 0.001-2.0 | 0.001-2.0 | 0.001-2.0 | 0.001-2.0 |
| Flavor beads | 0.2-0.8 | 0.2-0.8 | 0.2-0.8 | 0.2-0.8 |
| Cooling agent | 0-1.0 | 0-1.0 | 0-1.0 | 0-1.0 |
| Food acid (free and encapsulated) | 0-10.0 | 0-10.0 | 0-10.0 | 0-10.0 |
| High intensity sweeteners (free and encapsulated) | 0-10.0 | 0-10.0 | 0-10.0 | 0-10.0 |
| Total weight | 100 | 100 | 100 | 100 |

The soft chewing gum core composition was prepared by combining molten gum base with filler, bulk sweetener (xylitol/sorbitol, isomalt, etc.), and remaining chewing gum ingredients using a gum-mixing extruder to form a homogenous mass that is sheeted, scored and cut into individual cores. After conditioning, the cores were coated with a friable coating prepared by a panning process involving alternately dosing the cores with a 70 °Brix coating solution and dry charge as indicated in Table 2. First the coating solution is applied to the cores, followed by the dry charge, a period of air drying and then the process is repeated again starting with application of the coating solution. The process is repeated many times until the target coating weight is achieved. In one embodiment, about 15 to about 30 applications of coating are used. At various points during the coating cycle, flavor is applied. Once the desired coating weight is achieved the coated cores are conditioned at low humidity to result in a chewing gum product having a soft chewing gum core and a friable coating. The chewing gum product has about 75 wt% chewing gum core and about 25 wt% coating based on the total weight of the product.

**Table 2. Friable Coating Composition***

| Ingredient | Amount (weight % based on the total weight of the final product coating, dry) | Source |
|---|---|---|
| | | |
| Xylitol (150-355 micrometers) | 45-55 | Dry Charge |
| Gum Arabic | 0.5-1.2 | Dry Charge |
| Colorant, speckle, glitter | 0-0.5 | Dry Charge |
| | | |
| Flavor | 0-1.5 | Flavor addition |
| | | |
| | | |
| Xylitol | 35-45 | Coating Solution |
| Gum Arabic | 4.0-8.0 | Coating Solution |
| Colorant (e.g. TiO₂) | 0-0.2 | Coating Solution |
| Total weight | 100 | |

| | | |
|---|---|---|
| *Water is used to prepare the coating solution but is removed during a drying step. | | |

### Example 2. Chewing Gum Core Hardness Comparison

The hardness of the chewing gum core (without coating) of Formulation A, Example 1 was determined using a Durometer Hardness Tester. The hardness of comparative chewing gum cores were also measured after removal of any coating. The uncoated cores were prepared by placing coated gum in the container filled with room temperature water. The water in container was stirred for about 1 minute or until coating dissolved. The gum core was removed and allowed to dry at room temperature for 24 hours. The Durometer Shore A hardness of the cores was determined according to the following procedure. The sample is first placed on a hard flat surface. The indentor for the instrument (EXACTA Hardness Tester for non-metallic material, Model # EX300, Newage Testing Instruments, Inc. Southampton PA) is then pressed into the specimen making sure that it is parallel to the surface. The hardness is read within one second of firm contact with the specimen. The test measures the penetration of a specified indentor (indentor diameter: 0.7874 ± 0.025 mm; indentor extension: 1.25 ± 0.02 mm) into the material under specified conditions of force and time. The results are provided in Table 3. The soft chewing gum core of Example 1 was much lower than the comparative TRIDENT WHITE and MENTOS PURE cores. Although not as soft as the comparative ICE BREAKERS product core, the softness of Formulation A, Example 1 is sufficient to allow for the formation of a friable coating on the core while at the same time providing the consumer with a soft bite chew. If the soft chewing gum core were too soft, a friable/crisp coating could not be achieved as the cores would deform during the coating process. Rather, the Formulation A, Example 1 provides a balance of desirable soft chew texture for the core while being firm enough to be coated by a friable coating using the hybrid panning process to result in a unique combination of textural properties between the friable coating and soft chew core.

**Table 3.**

| **Core Sample** | **Durometer Shore A hardness** |
|---|---|
| Formulation A, Example 1 | 15.26 |
| ICE BREAKERS Peppermint | 4.7 |
| TRIDENT WHITE Peppermint | 52.04 |
| MENTOS PURE FRESH | 36.06 |

### Example 3. Chewing Gum Product Coating Hardness Comparison

The thickness of the finished product and comparative products is shown in Table 4.

**Table 4.**

| **Product** | **Product Thickness** | **Coating type** |
|---|---|---|
| Formulation A, Example 1 (with coating) | 13 mm | Friable (prepared by hybrid panning process), xylitol |
| ICE BREAKERS Peppermint | 13 mm | Sanded with large xylitol crystals |
| TRIDENT WHITE Peppermint | 6 mm | Hard maltitol coating |
| MENTOS PURE FRESH | 10 mm | Hard coating |

The texture of the coating on each of the products in Table 4. was measured using the following procedures.

### Procedure - data generation

1. Equipment - SMS texture analyzer (model TAXT Plus, US distributor: Texture Technologies Corp, New York, and Manufacturer: Stable Micro Systems, Godalming, Surrey, UK).
2. Probe - 2mm cylinder rounded end (TA-52)
3. Condition pellet at 23 - 25 °C and 25-50% relative humidity (RH) for one hour
4. Test at 23-25°C and 25-50% RH
5. Place pellet on holder located so that the probe will touch the center of the pellet
6. Probe speed is 1 mm/second
7. Start recording when probe touches the sample
8. Record force and penetration distance every 0.005mm (or 0.005 sec)
9. Total penetration distance is 2 mm, then probe withdraws
10. Remove sample, clean probe and instrument, place a different pellet on holder and repeat test for a total of 10 samples per product

From the texture analyzer data, a Crunch curve and a Slope curve were generated using the following procedures.

### Crunch curve

1. For each penetration distance, calculate the average force for that distance
2. Plot average force vs penetration distance for all products
3. The maximum penetration force will relate to how difficult it is to break through the coating

### Slope curve

1. Using the average force data determine the force difference between each set of successive data points and assign it to the data point with the higher penetration
2. Plot the slope vs penetration distance for all products. This will show both negative and positive numbers. Use the highest negative number as an indication of the degree of crunch. The higher is the negative number, the higher is the crunch factor. A low number means a soft coating, an intermediate number indicates crispiness and a high number indicates crunchiness

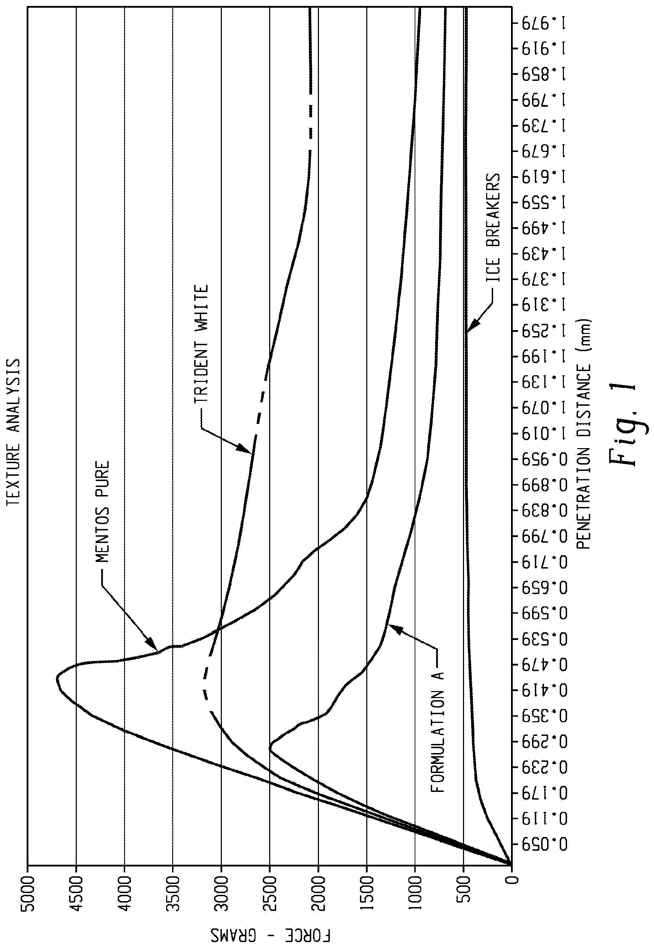

FIG. 1 illustrates the Crunch curve for the product of Example 1, Formulation A along with three comparative products. As the results show, the product of Formulation A has a coating the is not as hard as the hard coated MENTOS PURE and TRIDENT WHITE, but also has a coating that is not as soft as comparative ICE BREAKERS.

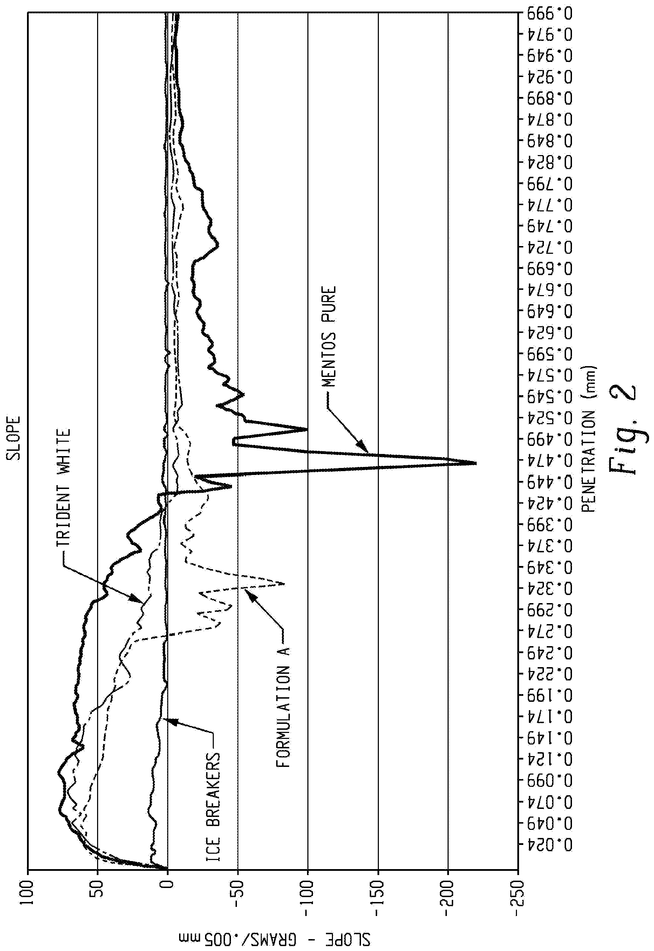

FIG. 2 illustrates the Slope curve for the product of Example 1, Formulation A along with three comparative products. As the results show, the product of Formulation A has an intermediate negative number, indicative of a friable coating whereas MENTOS PURE exhibits a high negative number indicative of a crunchy hard coating. Comparative ICE BREAKERS exhibits a low number indicative of a softer coating. The TRIDENT WHITE result is likely due to its harder core, which yields less than the softer core products.

### Example 4. Chewing Gum Product Coating Cooling Effect - Coating Dissolution Study

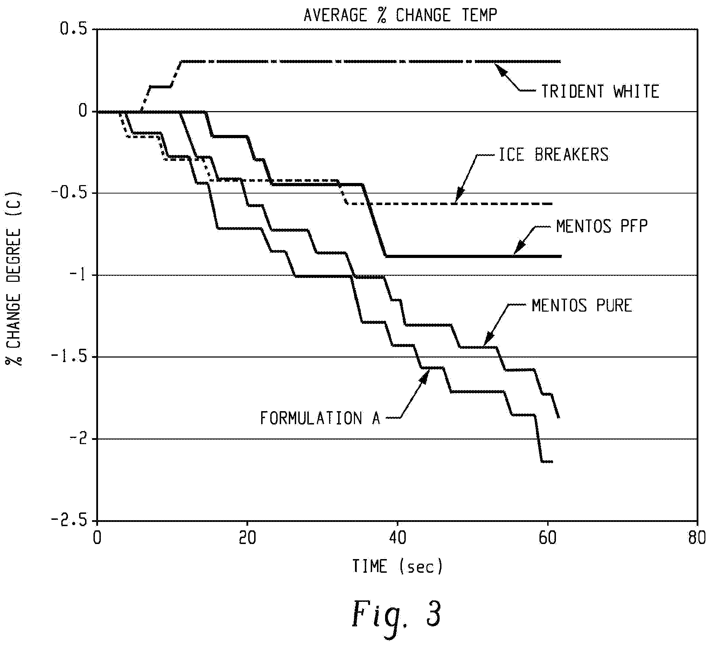

The cooling effect provided by the friable xylitol coating of Formulation A, Example 1 was determined and compared to four comparative products (Table 5). The cooling effect study was conducted by measuring the change of temperature versus time for each sample by agitating 1 piece of chewing gum product in 20 g of water for 60 seconds using a stir bar and stirring plate. Measurements were done in 3 replicates. Sixty seconds was enough time to remove the coating layer. The results are provided in FIG. 3 which shows the coated Formulation A, Example 1 provides enhanced cooling compared to the comparative coated chewing gum products.

**Table 5.**

| **Product** | **Coating type** |
|---|---|
| Formulation A, Example 1 (with coating) | Friable (prepared by hybrid panning process), xylitol |
| ICE BREAKERS Peppermint | Sanded with large xylitol crystals |
| TRIDENT WHITE Peppermint | Hard maltitol coating |
| MENTOS PURE FRESH | Hard coating |
| MENTOS powder filled pellet | Hard coating |

### Example 5. Chewing Gum Product Flavor Transition Study

The flavor profile of a soft chewing gum pellet with friable coating was conducted and compared with ICE BREAKERS Peppermint comparative product using a panel of sixteen individuals trained in the principles of quantitative descriptive analysis (QDA) as described by Stone & Sidel (Stone & Sidel, Sensory Evaluation Practices, 3rd ed. San Diego, CA. Elsevier Academic Press (2004)). Coated products of Example 1, Formulation A were prepared to contain a fruit flavor in the coating, a fruit and peppermint flavor in the core, and fruit flavor beads in the core. This product was tested for flavor attributes over time as the panelists chewed the product for a minimum of six minutes. The trained panelists were asked to rate the attributes of aroma, flavor, mouthfeel, texture, and aftertaste (1 minute post-chew). About a five minute break was taken in between each sample with palate cleansers (water and unsalted crackers). The trained panelists perceived the fruit flavor from the coating and then perceived the fruit flavor of the core. At 1 minute (m):10 seconds (s) to 1m:25s, the panelists perceived peppermint. Around 2m:30s, they perceived the fruit flavor of the beads along with peppermint. At around 3 m they mainly perceived peppermint flavor. The coated products of Example 1, Formulation A exhibited a soft chewing gum core with a friable coating and the delivery of three distinct flavors over the course of chewing where the consumer sensed flavor transitions from coating flavor to core flavor to core bead flavor and finally the core flavor.

In comparison to the complex flavor transition profile of the sample from Example 1, mint was the only perceived flavor for ICE BREAKERS Peppermint.

While the invention has been described with reference to an exemplary embodiment, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of coating a core, the method comprising:
providing the core, wherein the core comprises a gum base, a bulk sweetener, a flavorant, or a combination thereof;
forming a coating layer on the core, wherein the forming of the coating layer comprises
applying a coating solution to a surface of the core to form a coating solution layer,
applying a dry charge to the coating solution layer to form a partially dried coating solution layer, wherein the dry charge absorbs a portion of the coating solution and partially dries the coating solution, and
air drying the partially dried coating solution layer to form the coating layer on the surface of the core; and
repeating the forming of the coating layer until the coating layer is formed on the core a total of 5 times to 100 times.

2. The method of claim 1, further comprising curing the coated core after the coating layer is formed.

3. The method of claim 1, wherein a solids concentration of the coating solution is 55 wt % to 80 wt %.

4. The method of claim 1, wherein the coating layer is formed on the core 15 times to 30 times.

5. The method of claim 1, wherein the coating solution comprises water, a first sugar alcohol, and a hydrocolloid, and the dry charge comprises a second sugar alcohol and optionally a hydrocolloid.

6. The method of claim 1, wherein each of the first sugar alcohol and the second sugar alcohol is xylitol.

7. The method of claim 1, wherein the dry charge comprises a sugar alcohol having a mean particle diameter of 10 to 400 micrometers as measured using a laser particle size analyzer which measures particle size distribution based on the volume standard.

8. The method of claim 1, wherein the dry charge comprises a sugar alcohol having a mean particle diameter of 20 to 70 micrometers, a d90 of 80 to 150 micrometers, and a d10 of 1 micrometer to 15 micrometers as measured using a laser light diffraction technique and laser particle size analyzer which measures particle size distribution based on the volume standard.

9. The method of claim 1, wherein the method of coating the core is a hybrid coating method, and
wherein a coating prepared by the hybrid coating method is less dense than a coating prepared by a hard panned coating method using the same ingredients as the hybrid coating method.

10. A coated chewing gum product prepared by the method of any one of claims 1-9.

11. The coated chewing gum product of claim 10, wherein the coated chewing gum product exhibits a hardness measured as a peak force of 1500 to 3000 grams, 1750 to 2800 grams, or 2000 to 2500 grams said peak force being determined by means of a penetration test using a texture analyzer, said penetration test being carried out using a 2mm cylinder rounded end probe having a probe speed of 1 mm/second, comprising the steps of measuring each penetration distance, calculating the average force for that distance, plotting the average force vs penetration distance and determining the peak force.
